# EUROPEAN PATENT APPLICATION

(11) **EP 4 588 796 A1**
(43) Date of publication of application: **23.07.2025**
(21) Application number: 24152715.9
(22) Date of filing: 18.01.2024
(51) Int. Cl.: B64D 11/02

(54) **AIRCRAFT LAVATORY CONTROL SYSTEM**

(71) Applicant: B/E Aerospace Inc., Winston Salem, NC 27105 (US)
(72) Inventor: PORCINCULA, Marjorie Legaspi, 4232 Tanauan City (PH); NEMES, Mary Claire Valencia, 4232 Tanauan City (PH); NEGRE, Ergen Sawit, 4232 Tanauan City (PH); CUARTO, Mark Salvador Panganiban, 4232 Tanauan City (PH); BRION, Noreen Molas, 4232 Tanauan City (PH); LALUNIO, Ezra Ellaine A, 4232 Tanauan City (PH)
(74) Representative: Dehns

(57) **Abstract**

An aircraft lavatory comprising a door, an internal compartment with a floor, at least one pressure sensor located on and/or under the floor configured to detect the presence of a person within the internal compartment of the aircraft lavatory, and a control system configured to activate one or more of the systems of the aircraft lavatory in response to the one or more pressure sensors detecting the presence of a person within the internal compartment of the aircraft lavatory. The method also relates to a method of controlling the aircraft lavatory.

## Description

The present invention relates to an aircraft lavatory, and more specifically to an aircraft lavatory comprising the control system and a method of controlling an aircraft lavatory.

Passenger aircrafts are typically provided with one or more lavatories on board for use during a flight. This are of particular benefit during long-haul flights.

In order to ensure privacy, aircraft lavatory doors are equipped with a lock that require passengers to physically engage or disengage the lock. While effective in providing basic privacy, these manual locking systems have certain drawbacks. Passengers may forget to lock the door, leading to unintentional privacy breaches, or in some cases, passengers may inadvertently lock themselves in the lavatory, causing inconvenience and potential safety concerns.

In addition, aircraft lavatories typically have multiple electronic systems, as well as plumbing systems, which consume significant amounts of energy during a flight cycle. Moreover, these systems are typically active throughout the flight, regardless of whether or not the aircraft lavatory is in use.

There is therefore a need to provide a new control system for the aircraft lavatory which overcomes the abovementioned problems.

Viewed form a first aspect, there is provided an aircraft lavatory comprising: a door; an internal compartment with a floor; at least one pressure sensor located on and/or under the floor configured to detect the presence of a person within the internal compartment of the aircraft lavatory; and a control system configured to activate one or more of the systems of the aircraft lavatory when the one or more pressure sensors detecting the presence of a person within the internal compartment of the aircraft lavatory.

The control system may be configured to deactivate the one or more systems of the aircraft lavatory when the at least one pressure sensor does not detect the presence of a person within the internal compartment of the aircraft lavatory for a predetermined period of time.

The at least one pressure sensor may comprise a pressure pad configured to detect the presence of a person within the internal compartment of the aircraft due to changes in pressure on the surface of the pressure pads.

The one or more systems of the aircraft lavatory may include: an electromagnetic lock arranged to lock the door in a closed position; one or more electrical systems including lighting and/or extraction systems; and/or plumbing systems including water supply to a toilet and/or a faucet.

The control system may be configured to activate the electromagnetic lock automatically when the one or more pressure sensors detect the presence of a person within the internal compartment of the aircraft lavatory and the door is in the closed position.

The aircraft lavatory may comprise a contactless reader on an outer surface of the lavatory accessible by a person outside of the aircraft lavatory.

The control system may be configured to deactivate the electromagnetic lock when the contactless reader is activated by a tag.

The control system may be configured to activate the one or more electrical systems of the aircraft lavatory when the one or more pressure sensors detect the presence of a person within the internal compartment of the aircraft lavatory.

The control system may be configured to activate the plumbing systems of the aircraft lavatory when the one or more pressure sensors detect the presence of a person within the internal compartment of the aircraft lavatory.

The aircraft lavatory may comprise at least one internal motion sensor which may be provided on a surface of the internal compartment arranged to detect the presence of a person within the internal compartment of the aircraft lavatory.

The control system may be configured to activate one or more of the systems of the aircraft lavatory when the at least one internal motion sensor detects the presence of a person within the internal compartment of the aircraft lavatory.

The aircraft lavatory may comprise at least one external motion sensor on an outer surface of the aircraft lavatory arranged to detect the present of a person outside of the aircraft lavatory.

The control system may be configured to indicate to a person outside of the aircraft lavatory that the lavatory is occupied if both the at least one external motion sensors detects the presence of a person outside of the aircraft lavatory and the at least one pressure sensor detects the presence of a person within the internal compartment of the aircraft lavatory.

Viewed from a second aspect, there is provided a method of controlling an aircraft lavatory, the aircraft lavatory comprising a door, an internal compartment with a floor and at least one pressure sensor located on and/or under the floor, the method comprising: detecting the presence of a person within the internal compartment of the aircraft lavatory; and activating one or more of the systems of the aircraft lavatory in response to detecting the presence of a person within the internal compartment of the aircraft lavatory.

The method may comprise detecting a person leaving the internal compartment of the aircraft lavatory; and deactivating one or more systems of the aircraft lavatory after a predetermined period of time from detecting a person leaving the internal compartment of the aircraft lavatory.

Certain embodiments of the invention will now be described, by way of example only, with reference to the accompanying drawings, in which:
Figure 1 shows an unoccupied aircraft lavatory; and
Figure 2 shows an occupied aircraft lavatory.

Viewed from a first aspect, there is provided an aircraft lavatory comprising: a door; an internal compartment with a floor; at least one pressure sensor located on and/or under the floor configured to detect the presence of a person within the internal compartment of the aircraft lavatory; and a control system configured to activate one or more of the systems of the aircraft lavatory in response to the one or more pressure sensors detecting the presence of a person within the internal compartment of the aircraft lavatory.

The above arrangement means that the one or more systems within the aircraft lavatory may only be activated by the control system in response to the at least one pressure sensor detecting the presence of a person within the internal compartment of the aircraft lavatory. In other words, before a person enters the internal compartment of the lavatory, the one or more systems of the aircraft lavatory may be in an inactive state.

This can significantly reduce the power consumption of the aircraft lavatory when it is not in use, thus reducing the overall power consumption of the aircraft lavatory during flight.

In addition, the use of a pressure sensor to automatically detect the presence of a person within the aircraft lavatory negates the need for manual action by the person upon entering and/or leaving the aircraft lavatory to activate or deactivate the one or more systems.

The control system may be configured to deactivate the one or more systems of the aircraft lavatory when the one or more pressure sensors do not detect the presence of a person within the internal compartment of the aircraft lavatory for a predetermined period of time.

In other words, the control system may be configured to deactivate the one or more systems of the aircraft lavatory when the one or more pressure sensors no longer detect the presence of a person within the aircraft lavatory and a predetermined period of time has elapsed since the one or more pressure sensors detected the presence of a person within the aircraft lavatory.

The predetermined period of time may be up to 1 minute, optionally up to 30 seconds, optionally up to 10 seconds. As a further alternative, the predetermined period of time may be 0 seconds, and so effectively the control system may be configured to deactivate the one or more systems as soon as the at least one pressure sensor does not detect the presence of a person within the internal compartment of the aircraft lavatory.

The predetermined period of time may be considered a lag time between when the at least one pressure sensors do not detect a person within the internal compartment of the aircraft lavatory and when the one or more systems are deactivated by the control system.

This arrangement is advantageous in situations where upon one person exiting the internal compartment of the aircraft lavatory, another person enters almost immediately. This can be common during busy flights where there is often a queue to use the lavatories. It may be inefficient for the one or more systems to be deactivated and then almost immediately reactivated. Therefore, by configuring the control system to delay deactivation, this can be avoided.

The at least one pressure sensor may comprise any suitable pressure sensor for detecting the weight of a person standing on the floor of the internal compartment. For example, the at least one pressure sensor may comprise a pressure pad which may be configured to detect presence of a person within the internal compartment of the aircraft due to changes in pressure on the surface of the pressure pads. The pressure pads may comprise one or more of a strain gauge, piezoelectric or capacitive sensing arrangement.

The at least one pressure sensor may comprise a plurality of pressure sensors which may each be distributed across the surface of the floor of the internal compartment. The plurality of pressure sensors may be distributed evenly across the surface of the floor with an equal spacing between each pressure sensor.

The at least one pressure sensor may be located under the surface of the floor, or may be located above the surface of the floor. As a further alternative, the at least one pressure sensor may be integrated within the floor. In any arrangement, the at least one pressure sensor may be positioned at a location where it is able to detect the weight of a person being applied thereon.

The aircraft lavatory may further comprise at least one internal motion sensor. The at least one internal motion sensor may be provided on a surface of the internal compartment and may be arranged to detect the presence of a person within the internal compartment of the aircraft lavatory. The at least one motion sensor may be arranged to detect the presence of a person within the internal compartment by detecting movement within the internal compartment.

The at least one motion sensor may be provided on a ceiling of the internal compartment or on a side wall of the internal compartment. The at least one motion sensor may comprise a plurality of motion sensors, wherein a motion sensor may be provided on a ceiling of the internal compartment and/or a motion sensor may be provided on one or more of the sidewalls of the internal compartment.

The control system may be configured to activate one or more of the systems of the aircraft lavatory when the one or more internal motion sensors detects the presence of a person within the internal compartment of the aircraft lavatory.

In addition, the control system may be configured to deactivate the one or more systems of the aircraft lavatory when the at least one motion sensor does not detect the presence of a person within the internal compartment of the aircraft lavatory for a predetermined period of time. The discussion regarding the predetermined period of time applies here.

The at least one motion sensor may therefore advantageously act as a back-up for the at least one pressure sensor. For instance, in some situations the at least one pressure sensor may fail to detect the presence of a person within the internal compartment. This may be caused by the fact that the person is below a minimum weight detectable by the at least one pressure sensor, or the at least one pressure sensor may malfunction. In this instance, therefore, the control system may not activate the one or more systems of the aircraft lavatory. However, the provision of the at least one internal motion sensor can act as a redundancy and may detect the presence of a person within the internal compartment in the event that the at least one pressure sensor does not detect the presence of a person, and thereby cause the control system to activate the one or more systems of the aircraft lavatory accordingly.

Moreover, it may be appreciated that the at least one pressure sensor may detect the presence of a person within the internal compartment, but during the course of using the facilities of the aircraft lavatory their weight may leave the at least one pressure sensors. In this case, the presence of the person may still be detectable by the at least one motion sensor, which may prevent the control system from deactivating the one or more systems of the aircraft lavatory.

The one or more systems of the aircraft lavatory may include one or more of: an electromagnetic lock arranged to lock the door in a closed position; one or more electrical systems including lighting and/or extraction systems; and plumbing systems including water supply to a toilet and/or a faucet.

The control system may therefore be configured to activate one or more of an electromagnetic lock arranged to lock the door in a closed position; one or more electrical systems including lighting and/or extraction systems; and plumbing systems including water supply to a toilet and/or a faucet when the one or more pressure sensors detecting the presence of a person within the internal compartment of the aircraft lavatory and/or when the at least one internal motion sensor detects the presence of a person within the internal compartment of the aircraft lavatory.

In certain cases, the aircraft lavatory may include each of the above systems. However, in that case, the control system may only be configured to activate a sub-set of said systems. In other words, the control system may be configured to activate one or more of an electromagnetic lock arranged to lock the door in a closed position; one or more electrical systems including lighting and/or extraction systems; and plumbing systems including water supply to a toilet and/or a faucet.

More specifically, the control system may be configured to activate the electromagnetic lock automatically when the one or more pressure sensors detecting the presence of a person within the internal compartment of the aircraft lavatory and/or when the at least one internal motion sensor detects the presence of a person within the internal compartment of the aircraft lavatory. and the door is in the closed position.

This avoids the instance whereby a person may forget to lock the door in position. In addition, upon activation of the electromagnetic lock, the control system may be configured to provide an indication that the aircraft lavatory is occupied. This indication may be provided by an indicator provided on an outer surface of the aircraft lavatory. Accordingly, the aircraft lavatory may further comprise an indicator on an outer surface of the aircraft lavatory. The control system may be configured to cause the indicator to indicate that the aircraft lavatory is in an occupied state when the one or more pressure sensors detecting the presence of a person within the internal compartment of the aircraft lavatory and/or when the at least one internal motion sensor detects the presence of a person within the internal compartment of the aircraft lavatory.

The aircraft lavatory may comprise at least one external motion sensor on an outer surface of the aircraft lavatory arranged to detect the present of a person outside of the aircraft lavatory. The at least one external motion sensor may be arranged to detect a person approaching the aircraft lavatory. Accordingly, the at least one external motion sensor may have a range sufficient to detect movement within the vicinity of the aircraft lavatory. For example, the at least one external motion sensor may have a range of up to 2 metres, optionally up to 1 metre.

The control system may be configured to indicate to a person outside of the aircraft lavatory that the lavatory is occupied if both the at least one external motion sensors detects the presence of a person outside of the aircraft lavatory and the at least one pressure sensor detects the presence of a person within the internal compartment of the aircraft lavatory and/or when the at least one internal motion sensor detects the presence of a person within the internal compartment of the aircraft lavatory. The indication may be provided by the indicator on the outer surface of the aircraft lavatory.

The above arrangement thereby further minimises power consumption as the indicator may only indicate that the aircraft lavatory is occupied if movement is detected outside of the aircraft lavatory. Therefore, if the aircraft lavatory is occupied, by the at least one external motion sensor does not detect the presence of a person outside the aircraft lavatory, then the control system may be configured such that it does not provide an indication of the aircraft lavatory being occupied.

The aircraft lavatory may comprise a contactless reader on an outer surface of the aircraft lavatory. The contactless reader may be provided on any surface which is accessible by a person outside the aircraft lavatory. The contactless reader may be for use with a corresponding tag, wherein the tag may be used to activate the contactless reader. The control system may be configured to deactivate the electromagnetic lock when the contactless reader is activated by a tag. In this situation, the activation of the contactless reader may override the at least one pressure sensor or at least one motion sensor detecting the presence of a person within the internal compartment. As such, the electromagnetic lock may be deactivated even if a person is detected within the internal compartment. This is of particular benefit in emergency situations such as if the person within the internal compartment has lost consciousness and access to the internal compartment is required.

The aircraft lavatory may comprise an exit means on an internal surface of the aircraft lavatory. The exit means may comprise a button or lever. The control system may be configured to deactivate the electromagnetic lock when the exit means is activated.

The exit means may be used when the person within the internal compartment requires to exit the internal cavity. The activation of the exit means may therefore override the electromagnetic lock, and the control system may be configured to deactivate the electromagnetic lock, or any of the other systems of the aircraft lavatory, when the exit means is activated even if the at least one pressure sensor and/or the at least one internal motion sensor detects the presence of a person within the internal compartment.

The control system may be configured to activate the one or more electrical systems of the aircraft lavatory when the at least one pressure sensor detect the presence of a person within the internal compartment of the aircraft lavatory and/or when the at least one internal motion sensor detects the presence of a person within the internal compartment of the aircraft lavatory.

Consequently, the control system may be configured to deactivate the one or more electrical systems of the aircraft lavatory when the at least one pressure sensor does not detect the presence of a person within the internal compartment of the aircraft lavatory for predetermined period of time and/or when the at least one internal motion sensor detects the presence of a person within the internal compartment of the aircraft lavatory for a predetermined period of time.

The control system may be configured to activate the one or more plumbing systems of the aircraft lavatory when the at least one pressure sensor detect the presence of a person within the internal compartment of the aircraft lavatory and/or when the at least one internal motion sensor detects the presence of a person within the internal compartment of the aircraft lavatory.

Consequently, the control system may be configured to deactivate the one or more plumbing systems of the aircraft lavatory when the at least one pressure sensor does not detect the presence of a person within the internal compartment of the aircraft lavatory for predetermined period of time and/or when the at least one internal motion sensor detects the presence of a person within the internal compartment of the aircraft lavatory for a predetermined period of time.

It will be appreciated that the above invention also extends to a method of controlling the operation of an aircraft lavatory. Accordingly, when viewed from a second aspect, there is provided a method of controlling an aircraft lavatory, the aircraft lavatory comprising a door, an internal compartment with a floor and at least one pressure sensor located on and/or under the floor, the method comprising: detecting the presence of a person within the internal compartment of the aircraft lavatory; and activating one or more of the systems of the aircraft lavatory in response to detecting the presence of a person within the internal compartment of the aircraft lavatory.

The method may further comprise detecting a person leaving the internal compartment of the aircraft lavatory; and deactivating one or more systems of the aircraft lavatory after a predetermined period of time from detecting a person leaving the internal compartment of the aircraft lavatory.

The step of detecting the presence of a person within the internal compartment of the aircraft lavatory may be achieved by the at least one pressure sensor located on and/or under the floor. Alternatively, or in addition, the aircraft lavatory may comprise at least one internal motion sensor arranged to detect the presence of a person within the internal compartment of the aircraft lavatory. The step of detecting the presence of a person within the internal compartment of the aircraft lavatory may therefore be carried out by the at least one internal motion sensor in addition, or in alternative to, the at least one pressure sensor.

The aircraft lavatory of the second aspect may comprise any of the features of the aircraft lavatory as described in the first aspect. Furthermore, the method according to the second aspect may comprise any of the steps carried out by the control system as described in the first aspect above.

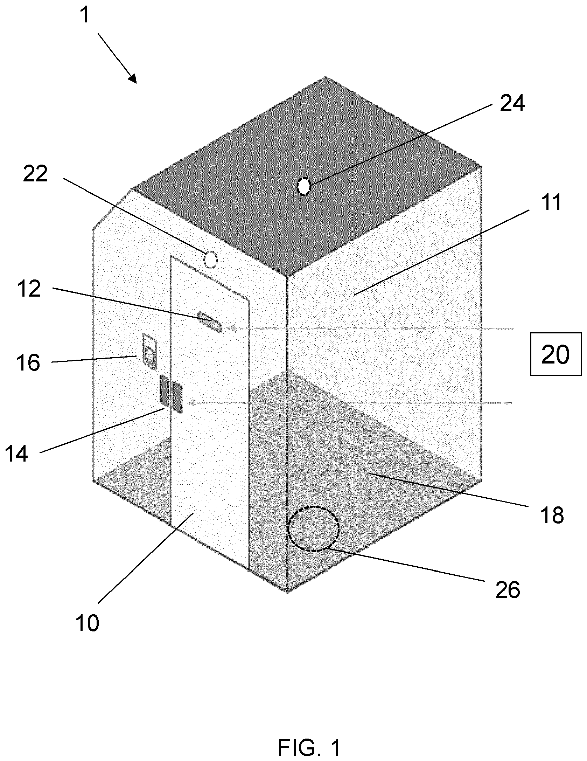

Figure 1 shows an aircraft lavatory 1 for use on board an aircraft. These are typically provided at both the front and rear of the aircraft for use by the passengers and crew members during flight. Each aircraft lavatory 1 is designed and sized for one person at a time, or in certain cases one person plus one infant.

The aircraft lavatory 1 includes an internal compartment 11 which in practice would comprise at least a toilet, faucet and wash-basin, and one or more other systems, wherein the other systems may include the electrical systems, such as the lighting and extraction systems, and plumbing systems, such as the flushing system for the toilet and the water system to supply the faucet. However, for simplicity these features are not depicted in the present drawings.

The aircraft lavatory 1 also includes a door 10 which provides access to the internal compartment 11 of the lavatory 1. The door 10 comprises an indicator 12 which is configured to indicate whether or not the lavatory 1 is occupied. This indication may be in the form of text, or alternatively may use colour. For example, a red colour may be used to indicate that the lavatory 1 is occupied and a green colour may be used to indicate that the lavatory 1 is unoccupied, and therefore available for use.

The door 10 also comprises an electromagnetic locking system 14 which is configured to lock the door 10 in a closed position if he aircraft lavatory is occupied.

The outer surface of the lavatory 1 also comprises a contactless reader 16, for example a Radio Frequency Identification (RFID) reader 16. The RFID reader 16 is configured to detect a corresponding RFID tag used by a member of the cabin crew. When the RFID tag is brought into contact with the RFID reader 16 the electromagnetic lock 14 can be overridden allowing the door 10 to be opened from outside of the lavatory 1 if necessary.

The internal compartment 11 of the lavatory 1 includes a floor 18 which is provided with one or more pressure sensors 26 spread evenly across the floor 18. The pressure sensors 26 may be any type of pressure sensor capable of being activated by pressure being applied to them, for example a pressure pad.

The one or more pressure sensors 26 may be located either on or under the floor 18 so that they are able to detect when a person enters the lavatory 1 and applies weight to the floor 18 thereby activating the one or more pressure sensors 26.

An outer surface of the aircraft lavatory 1 is also provided with at least one motion sensor 22 arranged to detect movement of a person outside the lavatory. The range of the at least one motion sensor 22 can be limited such that it only detects movement within a certain proximity of the aircraft lavatory 1, for example, it may only detect movement within up to 1 to 2 metres of the aircraft lavatory 1. In other words, the motion sensor 22 may be arranged to detect movement of a person who is attempting to gain access to the aircraft lavatory 1.

The motion sensor 22 may comprise any type of sensor capable of detecting movement. However, as an example, the motion sensor 22 may comprise infrared (IR) sensors, such as Passive Infrared (PIR) sensors, or alternatively microwave sensors or ultrasonic sensors.

In addition to the motion sensor 22 located on an outer surface of the aircraft lavatory 1, the lavatory may also comprise a external motion sensor 24 located on the ceiling of the internal compartment of the aircraft lavatory 1. This external motion sensor 22 can operate in combination with the one or more pressure sensors 26 located in the floor 18 to detect the presence of a person inside the aircraft lavatory. This is of particular benefit in the case of a small infant entering the lavatory 1 who may not have sufficient weight to apply the required pressure to the one or more pressure sensors 26. In addition, when the person is using the toilet in a seated position, the weight acting on the one or more pressure sensors 26 may not be sufficient for them to detect the presence of a person within the aircraft lavatory 1.

The aircraft lavatory 1 further comprises a control system 20 which is configured to control the activation and operation of the aircraft lavatory 1. In particular, the control system 20 is arranged to receive data from the one or more pressure sensors 26, and in turn operate the systems of the aircraft lavatory 1, such as the electromagnetic lock 14, the indicator 12, the electrical

In use, when the aircraft lavatory 1 is unoccupied as shown in Figure 1, there is no pressure being applied to the one or more pressure sensors 26 on/under the floor 18. In this unoccupied state the various systems of the aircraft lavatory 1 are inactive. In particular, the electrical systems such as the lighting and extraction systems remain inactive. However, for emergency purposes a portion of the lighting system may be kept active. For example, this may provide a dim light to the internal compartment 11 of the lavatory.

In addition, the plumbing systems are also inactive, such that the water supply to both the flush of the toilet and the faucet of the wash-basin is deactivated.

Furthermore, the electromagnetic locking system 14 is inactive when the aircraft lavatory 1 is unoccupied so that the door 10 is unlocked to allow a person to enter the lavatory 1.

When in the unoccupied state, the indicator 12 can be used to indicate that the lavatory 1 is unoccupied.

In this unoccupied state the aircraft lavatory 1 energy usage can be minimised significantly, and the overall energy consumption of the aircraft can be reduced, thereby improving its efficiency.

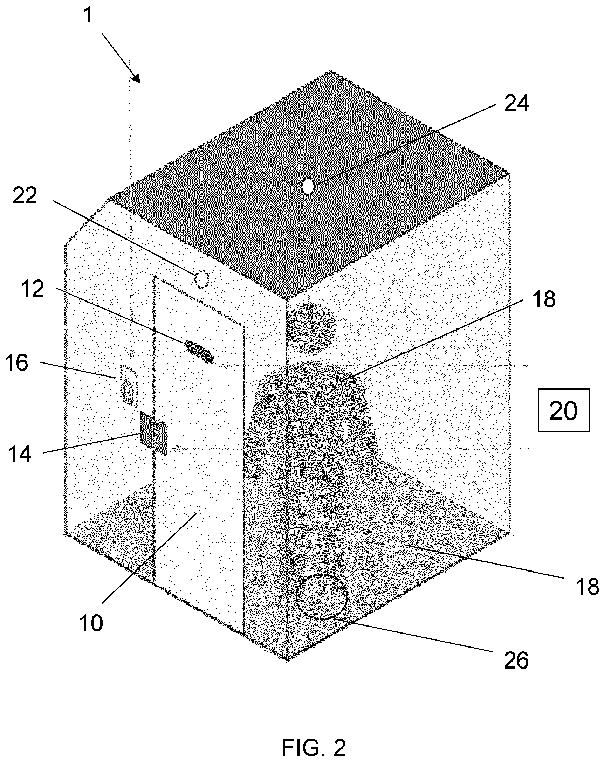

Once a person enters the lavatory 1 as depicted in Figure 2, their weight is applied to the one or more pressure sensors 26 in the floor 18 thereby allowing the one or more pressure sensors 26 to detect the presence of a person within the lavatory 1. Once the door 10 has been moved to the closed position, and the one or more pressure sensors 26 detect the presence of a person inside the aircraft lavatory 1, the control system 20 activates the electromagnetic lock 14 to lock the door 10 in the closed position.

This avoids the issue whereby the user of the lavatory 1 forgets to lock the door 10 in the case of a manual locking mechanism. In the present invention, the door 10 is locked automatically by the control system 20 in response to the person entering the lavatory 1 and being detected by the one or more pressure sensors 26 in the floor 18.

In addition to the electromagnetic lock 14 being activated, the control system 20 also activates the other systems of the aircraft lavatory once the presence of a person within the lavatory 1 is detected. In particular, the control system 20 activates the electrical systems including the lighting and extraction system. Additionally, the control system 20 activates the plumbing systems ready for use, including the water supply to the toilet flush and faucet in the wash basin.

The control system 20 also causes the indicator 12 to indicate that the lavatory is occupied so that other passengers and crew on board the aircraft are aware.

In order to conserve energy further, the control system may be configured such that it only causes the indicator 12 to indicate that the lavatory is occupied when the motion sensor 22 on the outer surface of the lavatory 1 detects movement of a person approaching the lavatory 1. Effectively, the indicator 12 in this arrangement will only indicate that the lavatory 1 is occupied in the event that a person is approaching the lavatory 1.

When the door 10 is locked in the closed position using the electromagnetic locking mechanism 14 a person outside the aircraft will not be able to open the door 10. However, in the event of an emergency, or any other situation where access to the lavatory 1 is required by the door 10 is locked, the contactless reader 16 can be used to override the electromagnetic locking mechanism 14. In particular, a member of the cabin crew may activate the reader 16 using their corresponding tag 16, and the control system 20 will deactivate the electromagnetic locking mechanism 14 to provide access to the lavatory 1.

An internal surface of the aircraft lavatory 1 is provided with an exit means, such as a button or lever. When the person within the aircraft lavatory 1 activates the exit means, the electromagnetic locking mechanism 14 is deactivated, allowing the door 10 to be opened so the person may exit the lavatory 1.

Once the person exits the lavatory 1, the pressure sensors 26 in the floor 18 and/or the motion sensor 24 in the ceiling would no longer detect a person within the lavatory 1. The control system 20 may then deactivate the one or more systems within the aircraft lavatory 1 in order return to a reduced energy mode.

The control system 20 may deactivate the one or more systems of the aircraft lavatory 1 after a predetermined period of time of the aircraft lavatory 1 remaining unoccupied. For instance, in many cases, one a person exits the lavatory 1, a person may already be waiting to enter and so the one or more pressure sensors 26 in the floor 18 would detect the presence of a person within the aircraft lavatory 1 soon after the previous person exited the lavatory 1.

In this instance, it may be inefficient to deactivate the one or more systems of the lavatory 1 for them to simply be re-activated immediately after. Therefore, the control system 20 may configured such that it deactivates the one or more systems of the aircraft lavatory 1 after a period of up to 5 seconds where the one or more pressure sensors 26 and/or the motion sensor 24 do not detect the presence of a person within the aircraft lavatory 1.

## Claims

1. An aircraft lavatory comprising:
a door;
an internal compartment with a floor;
at least one pressure sensor located on and/or under the floor configured to detect the presence of a person within the internal compartment of the aircraft lavatory; and
a control system configured to activate one or more of the systems of the aircraft lavatory when the one or more pressure sensors detecting the presence of a person within the internal compartment of the aircraft lavatory.

2. The aircraft lavatory of claim 1, wherein the control system is configured to deactivate the one or more systems of the aircraft lavatory when the at least one pressure sensor does not detect the presence of a person within the internal compartment of the aircraft lavatory for a predetermined period of time.

3. The aircraft lavatory of claim 1 or 2, wherein the at least one pressure sensor comprises a pressure pad configured to detect the presence of a person within the internal compartment of the aircraft due to changes in pressure on the surface of the pressure pads.

4. The aircraft lavatory of any preceding claim, wherein the one or more systems of the aircraft lavatory include:
an electromagnetic lock arranged to lock the door in a closed position;
one or more electrical systems including lighting and/or extraction systems; and
plumbing systems including water supply to a toilet and/or a faucet.

5. The aircraft lavatory of claim 4, wherein the control system is configured to activate the electromagnetic lock automatically when the one or more pressure sensors detect the presence of a person within the internal compartment of the aircraft lavatory and the door is in the closed position.

6. The aircraft lavatory of any preceding claim, comprising a contactless reader on an outer surface of the lavatory accessible by a person outside of the aircraft lavatory.

7. The aircraft lavatory of claim 6, when dependent on claim 5, wherein the control system is configured to deactivate the electromagnetic lock when the contactless reader is activated by a tag.

8. The aircraft lavatory of any of claims 4 to 7, wherein the control system is configured to activate the one or more electrical systems of the aircraft lavatory when the one or more pressure sensors detect the presence of a person within the internal compartment of the aircraft lavatory.

9. The aircraft lavatory of any of claims 4 to 8, wherein the control system is configured to activate the plumbing systems of the aircraft lavatory when the one or more pressure sensors detect the presence of a person within the internal compartment of the aircraft lavatory.

10. The aircraft lavatory of any preceding claim, comprising at least one internal motion sensor provided on a surface of the internal compartment arranged to detect the presence of a person within the internal compartment of the aircraft lavatory.

11. The aircraft lavatory of claim 10, wherein the control system is configured to activate one or more of the systems of the aircraft lavatory when the at least one internal motion sensor detects the presence of a person within the internal compartment of the aircraft lavatory.

12. The aircraft lavatory of any preceding claim, comprising at least one external motion sensor on an outer surface of the aircraft lavatory arranged to detect the present of a person outside of the aircraft lavatory.

13. The aircraft lavatory of claim 12, wherein the control system is configured to indicate to a person outside of the aircraft lavatory that the lavatory is occupied if both the at least one external motion sensors detects the presence of a person outside of the aircraft lavatory and the at least one pressure sensor detects the presence of a person within the internal compartment of the aircraft lavatory.

14. A method of controlling an aircraft lavatory, the aircraft lavatory comprising a door, an internal compartment with a floor and at least one pressure sensor located on and/or under the floor, the method comprising:
detecting the presence of a person within the internal compartment of the aircraft lavatory; and
activating one or more of the systems of the aircraft lavatory in response to detecting the presence of a person within the internal compartment of the aircraft lavatory.

15. The method of claim 14, detecting a person leaving the internal compartment of the aircraft lavatory; and
deactivating one or more systems of the aircraft lavatory after a predetermined period of time from detecting a person leaving the internal compartment of the aircraft lavatory.
